# EUROPÄISCHE PATENTSCHRIFT

(11) **EP 2 321 539 B1**
(45) Veröffentlichungstag und Bekanntmachung des Hinweises auf die Patenterteilung: **05.03.2014**
(21) Anmeldenummer: 09776140.7
(22) Anmeldetag: 24.08.2009
(51) Int. Cl.: F16B 2/00, F16B 39/282, F16B 43/00

(54) **BEILAGSCHEIBE, SCHRAUBE ODER MUTTER MIT ERHÖHTEM REIBBEIWERT**
WASHER, SCREW OR NUT WITH INCREASED COEFFICIENT OF FRICTION
RONDELLE DE CALAGE, VIS OU ÉCROU À COEFFICIENT DE FROTTEMENT ACCRU

(30) Priorität: 26.08.2008 DE 202008011371 U
(43) Veröffentlichungstag der Anmeldung: 18.05.2011
(60) Teilanmeldung: 12168339.5
(73) Patentinhaber: Ruia Global Fasteners AG, 41462 Neuss (DE)
(72) Erfinder: SCHRAER, Thorsten, 85305 Jetzendorf (DE)
(74) Vertreter: Beck, Alexander
(86) Internationale Anmeldenummer: PCT/DE2009/050046
(87) Internationale Veröffentlichungsnummer: WO 2010/022720

(56) Entgegenhaltungen:
- WO-A1-2008/066031
- DE-U1- 9 201 686
- GB-A- 993 021

## Beschreibung

Die vorliegende Erfindung betrifft eine Beilagscheibe, Schraube oder Mutter mit einer einem Werkstück zugewandten Stirnfläche, an der sie mit einem den Reibbeiwert erhöhenden Profil versehen ist.

In der Automobilindustrie entsteht mehr und mehr das Problem, dass der vorhandene Bauraum für Verbindungselemente kleiner wird und die zu übertragenden Kräfte aufgrund höherer Fahrzeugleistungen und größerer Ansprüche steigen. Dabei wirken an manchen Verbindungen wie Domstreben, Schubstreben, Seitenaufprallträger etc. hauptsächlich Querkräfte. Um größere Querkräfte (FQ) aufnehmen zu können, ist gemäß der Formel FKerf = FQ/µQ eine größere Klemmkraft (FKerf) oder ein größerer Reibbeiwert (µQ) erforderlich.

Größere Klemmkraft ist nur durch eine größere Schraubenvorspannkraft erreichbar. Diese kann wiederum nur durch eine größere Schraubenabmessung oder durch ein Verschrauben bis in die Streckgrenze des Schraubenwerkstoffes erzielt werden. Wenn der Platz für eine größere Schraube nicht vorhanden ist und ein Verschrauben bis in die Streckgrenze nicht zulässig ist, bleibt nur noch die Erhöhung des Reibwertes.

Gemäß dem bekannten Stand der Technik wird dies in manchen Anwendungsfällen wie bei Riemenscheiben etc. durch zusätzliche Elemente, wie beispielsweise Diamantscheiben, versucht. Diese Lösung ist jedoch aufgrund des relativ teuren Elementes und des zusätzlichen Bauteils teuer und aufwendig.

Im Stand der Technik ist aus der GB 993 021 bereits eine Beilagscheibe mit einer einem Werkstück zugewandten Stirnfläche zur Verbesserung der Abdichtung einer Schraubverbindung bekannt, die mit einem konzentrischen, ringförmig umlaufenden Steg versehen ist, wobei der Bereich der Stirnfläche außerhalb des umlaufenden Steges von außen auf den Steg hin konisch zuläuft und wobei die Neigung von außen nach innen von dem Werkstück weg gerichtet ist.

Eine ähnliche Unterlegscheibe ist ebenfalls zur Verbesserung der Abdichtung aus der DE 92 01 686 U1 bekannt. Dort ist jedoch eine gegenüber dem Werkstück plane Stirnfläche mit mehreren, konzentrischen, ringförmig umlaufenden Stegen versehen.

Die WO 2008/066 031 A1 zeigt demgegenüber wiederum eine als Dichtung dienende Beilagscheibe, die eine gegenüber dem Werkstück plane Stirnfläche mit von außen nach innen mit einem Winkel von 60 bis 89° gegenüber der Rotationsachse der Beilagscheibe geneigten Verlauf aufweist. Plan bedeutet hier, ohne irgendwelche Erhebungen oder Stege.

Alle vorgenannten Druckschriften aus dem Stand der Technik zeigen Beilagscheiben, die der Verbesserung der Abdichtung der Schraubendurchführung dienen.

Ausgehend von diesem Stand der Technik ist es Aufgabe der vorliegenden Erfindung den Reibwert gegenüber den aus dem Stand der Technik bekannten Lösungen zu erhöhen.

Erfindungsgemäß wird diese Aufgabe dadurch gelöst, dass die dem jeweiligen Werkstück zugewandte Stirnfläche einer Beilagscheibe, Schraube oder Mutter erfindungsgemäß mit einem speziellen Profil versehen ist. Dabei haben Noppen oder Rippen als Profil nicht den gewünschten Erfolg erzielt. Die vorliegende Erfindung wählt daher erstmals zur Lösung der genannten Aufgabe eine Stirnfläche, die mit einem konzentrischen, ringförmig umlaufenden Steg als Profil und einem Bereich außerhalb des umlaufenden Steges, der von außen auf den Steg hin konisch zuläuft, wobei die Neigung von außen nach innen von dem Werkstück weg gerichtet ist und die Neigung des konisch zulaufenden Bereichs gegenüber der Werkstückebene 1,5 bis 2,5° beträgt, versehen ist.

Diese besondere erfindungsgemäße Geometrie kann im Vergleich mit allen im Stand der Technik bekannten Geometrien weitaus die höchsten Querkräfte aufnehmen. Ein zusätzlicher Vorteil der vorliegenden Erfindung ist es dabei noch, dass durch die vorliegende Erfindung eine hundertprozentige Wasserdichtigkeit der Verbindung erzielt wird. Dies ist häufig notwendig, da Wasser in Verbindung mit beispielsweise Streusalz im Winter zwischen dem Werkstoff der Beilagscheibe, Schraube oder Mutter (Stahl) und dem Werkstoff des Werkstücks (heutzutage üblicherweise Aluminium) aufgrund der elektrochemischen Spannungsreihe zu schweren Korrosionserscheinungen führen kann. Dies ist also ein besonderer Vorteil der vorliegenden Erfindung, wenn diese bei Werkstoffpaarungen Anwendung findet, bei denen unterschiedliche elektrochemische Spannungen vorliegen.

Das erfindungsgemäße Profil für die Stirnfläche von Beilagscheiben, Schrauben oder Muttern erhöht den theoretischen Reibbeiwert durch Formschluss so stark, dass sehr hohe Querkräfte übertragen werden können. Dabei kann ein theoretischer Reibbeiwert von 1 nahezu erreicht werden.

Gemäß dem Stand der Technik werden je nach Oberfläche üblicherweise Reibbeiwerte von 0,1 bis 0,3 erreicht. Ein zusätzlicher Vorteil der Erfindung ist dann noch die absolute Wasserdichtigkeit der Verbindung.

Das erfindungsgemäße Profil kann aufgrund seiner kreisrunden Symmetrie direkt an der Stirnfläche einer Schraube, einer Mutter oder einer Blindnietmutter angebracht oder angepresst werden. Zusätzlich ist es erfindungsgemäß auch möglich, das erfindungsgemäße Profil auf eine Beilagscheibe aufzubringen und diese Beilagscheibe dann mit einer normalen Schraube, Mutter oder Blindnietmutter zu verwenden oder die entsprechende Beilagscheibe sogleich durch Anwalzen, Verschweißen oder Verkleben mit dem jeweiligen Verbindungselement zu verbinden.

Der erfindungsgemäße konzentrische, ringförmig umlaufende Steg auf der Stirnfläche dringt in den Grundwerkstoff des Werkstücks ein und überträgt dort über Formschluss die großen Querkräfte.

Es ist dabei besonders bevorzugt, wenn der Bereich der Stirnfläche innerhalb des umlaufenden Steges gegenüber dem Werkstück tiefer angeordnet ist als der äußere Bereich beziehungsweise als der theoretische Nullpunkt der Berührungsfläche zwischen Stirnfläche und Werkstück. Dadurch kann sichergestellt werden, dass der Steg immer zuerst und komplett in den Grundwerkstoff des Werkstücks (üblicherweise Aluminium oder ein anderes Leichtmetall) eintaucht. Auf diese Weise werden der Formschluss, die Wasserdichtigkeit und die hohe Querkraftübertragungsfähigkeit sichergestellt.

Die vorliegende Erfindung wird im Folgenden anhand des in der Zeichnung dargestellten Ausführungsbeispieles näher erläutert. Es zeigt:
Figur 1 eine erfindungsgemäße Beilagscheibe in Radialrichtung geschnitten;
Figur 2 das Detail X der Figur 1; und
Figur 3 die Beilagscheibe der Figur 1 mit Blick auf die werkstückseitige Stirnfläche.

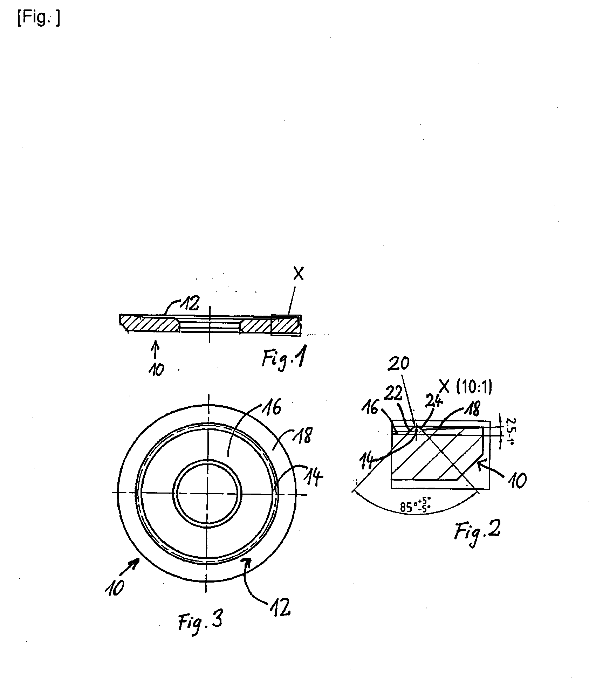

Figur 1 zeigt eine Schnittdarstellung einer erfindungsgemäßen Beilagscheibe 10 entlang der Rotationsachse geschnitten. Diese Beilagscheibe 10 weist eine Stirnfläche 12 auf, die bei Montage der Beilagscheibe 10 einem Werkstück zugewandt ist. Wie in den Figuren 2 und 3 besser erkennbar, ist auf dieser Stirnfläche 12 ein konzentrisch umlaufender Steg 14 angebracht.

Wie man in Figur 2 besonders gut erkennt, ist der Bereich 16 der Stirnfläche 12 innerhalb des umlaufenden Steges 14 gegenüber dem Werkstück tiefer angeordnet, vorzugsweise um 0,2 bis 0,4 mm.

Wie man ebenfalls am Besten in der Detaildarstellung der Figur 2 erkennt, ist der Bereich 18 der Stirnfläche 12 außerhalb des umlaufenden Steges 14 mit einer Neigung von 1,5 bis 2,5° gegenüber der Werkstückebene dergestalt geneigt, dass sich der Abstand zwischen dem Werkstück und der Oberfläche der Beilagscheibe 10 von außen auf den Steg 14 hin vergrößert.

Wie ebenfalls in der Detaildarstellung Figur 2 erkennbar, weist der Steg 14 einen Querschnitt in Form eines abgerundeten V auf, dessen abgerundete Spitze 20 auf das Werkstück hin zeigt. Die Flanken 22, 24 des Steges 14 laufen dabei mit einem Winkel von 80 bis 90° aufeinander zu.

Die vorliegende Erfindung ist hier anhand einer Beilagscheibe erläutert worden. In gleicher Weise wie hier für eine Beilagscheibe beschrieben, kann die vorliegende Erfindung natürlich auch an einer entsprechenden Stirnfläche einer Mutter oder Blindnietmutter oder an der Kopfunterseite einer Schraube verwirklicht werden, in dem die entsprechenden jeweils dem Werkstück zugewandten Stirnflächen entsprechend gestaltet werden.

Die erfindungsgemäße Beilagscheibe kann sowohl lose verwendet werden, als auch an ein entsprechendes Verbindungselement angewalzt, angeschweißt oder angeklebt.

Eine besonders preisgünstige Herstellung für das erfindungsgemäße Profil der Stirnfläche ergibt sich natürlich dann, wenn das entsprechende Profil sogleich bei der Herstellung auf die entsprechende Stirnfläche der Mutter, Blindnietmutter oder Schraube aufgebracht wird.

## Patentansprüche

1. Beilagscheibe (10), Schraube oder Mutter mit einer einem Werkstück zugewandten Stirnfläche (12), bei der die Stirnfläche (12) mit einem konzentrischen, ringförmig umlaufenden Steg (14) versehen ist, und der Bereich (18) der Stirnfläche (12) außerhalb des umlaufenden Steges (14) von außen auf den Steg (14) hin konisch zuläuft, wobei die Neigung von außen nach innen von dem Werkstück weg gerichtet ist, **dadurch gekennzeichnet, dass** die Neigung des konisch zulaufenden Bereichs (18) gegenüber der Werkstückebene 1,5 - 2,5° beträgt.

2. Beilagscheibe (10), Schraube oder Mutter nach Anspruch 1, **dadurch gekennzeichnet, dass** der Bereich (16) der Stirnfläche (12) innerhalb des umlaufenden Steges (14) gegenüber dem Werkstück tiefer angeordnet ist.

3. Beilagscheibe (10), Schraube oder Mutter nach Anspruch 1 oder 2, **dadurch gekennzeichnet, dass** der Steg (14) einen Querschnitt in Form eines abgerundeten V aufweist, dessen abgerundete Spitze (20) auf das Werkstück hin zeigt.

4. Beilagscheibe (10), Schraube oder Mutter nach Anspruch 3, **dadurch gekennzeichnet, dass** die Flanken (22, 24) des Steges (14) einen Winkel von 80° bis 90° einschließen.

5. Beilagscheibe (10), Schraube oder Mutter nach Anspruch 2, **dadurch gekennzeichnet, dass** der Bereich (16) der Stirnfläche (12) innerhalb des Steges (14) gegenüber dem Steg um 0,2 bis 0,4 mm tiefer liegt.

## Claims

1. Washer (10), screw or nut comprising an end face (12) facing a work-piece, wherein the end face (12) is provided with a concentric, annularly encircling web (14), and the region (18) of the end face (12) outside the encircling web (14) tapers conically towards the web (14) from the outside, the inclination from the outside to the inside being directed away from the work-piece, **characterized in that** the inclination of the conically tapering region (18) to the plane of the workpiece is 1,5 to 2,5°..

2. Washer (10), screw or nut according to claim 1, **characterized in that** the region (16) of the end face (12) Inside the encircling web (14) is arranged deeper relative to the workpiece.

3. Washer (10), screw or nut according to claim 1 or 2, **characterized in that** the web (14) has a cross-section In the form of a rounded V, the rounded point (20) of which points towards the workpiece.

4. Washer (10), screw or nut according to claim 3, **characterized in that** the flanks (22, 24) of the web (14) together form an angle of 80° to 90°.

5. Washer (10), screw or nut according to claim 2, **characterized in that** the region (16) of the end face (12) inside the web (14) is arranged 0.2 to 0.4 mm deeper than the web.

## Revendications

1. Rondelle de calage (10), vis ou écrou avec une face frontale (12) tournée vers une pièce, dans laquelle ou dans lequel la face frontale (12) est munie d'un talon (14) circonférentiel annulaire concentrique, et la zone (18) de la face frontale (12) à l'extérieur du talon (14) circonférentiel est conique en partant de l'extérieur et en se dirigeant vers le talon (14), l'inclinaison étant dirigée à partir de l'extérieur vers l'intérieur en s'éloignant de la pièce, caractérisé(e) en ce que l'inclinaison de la zone (18) clonique par rapport au plan de la pièce est comprise entre 1,5 et 2,5°.

2. Rondelle de calage (10), vis ou écrou selon la revendication 1, caractérisé(e) en ce que la zone (16) de la face frontale (12) à l'intérieur du talon (14) circonférentiel est disposée plus bas par rapport à la pièce.

3. Rondelle de calage (10), vis ou écrou selon la revendication 1 ou 2, caractérisé(e) en ce que le talon (14) présente une section transversale en forme de V arrondi dont la pointe (20) arrondie est dirigée vers la pièce.

4. Rondelle de calage (10), vis ou écrou selon la revendication 3, caractérisé(e) en ce que les flancs (22, 24) du talon (14) forment un angle compris entre 80° et 90°.

5. Rondelle de calage (10), vis ou écrou selon la revendication 2, caractérisé(e) en ce que la zone (16) de la face frontale (12) à l'intérieur du talon (14) est plus basse de 0,2 à 0,4 mm par rapport au talon.
